# EUROPÄISCHE PATENTANMELDUNG

(11) **EP 4 194 412 A1**
(43) Veröffentlichungstag der Anmeldung: **14.06.2023**
(21) Anmeldenummer: 22202113.1
(22) Anmeldetag: 18.10.2022
(51) Int. Cl.: C03B 29/08, B32B 17/10

(54) **OFENSYSTEM ZUR ERWÄRMUNG VON VERBUNDGLASSCHEIBEN**

(30) Priorität: 02.12.2021 DE 102021131796
(71) Anmelder: Benteler Maschinenbau GmbH, 33602 Bielefeld (DE)
(72) Erfinder: HÜLSEWEDDE, Ralf, 33829 Borgholzhausen (DE); LINNENBRÜGGER, Christoph, 33729 Bielefeld (DE); STAUBACH, Andreas, 33818 Leopodshöhe (DE)
(74) Vertreter: Osterhoff, Utz

(57) **Zusammenfassung**

Die vorliegende Erfindung betrifft ein Ofensystem 7 zur Erwärmung von Verbundglasscheiben 1, aufweisend mindestens ein Ofenmodul 8, wobei die Verbundglasscheiben horizontal orientiert auf Transportrollen 10 durch das Ofensystem 7 transportierbar sind und das Ofensystem 7 ein äußeres kastenförmiges Gehäuse 9 aufweist, wobei in dem Gehäuse 9 Strahlungswärmequellen und Konvektionswärmequellen angeordnet sind, dadurch gekennzeichnet, dass die Konvektionswärmequellen als längliche Rohrdüsen mit punktförmigen Ausströmöffnungen ausgebildet sind, die quer zur Transportrichtung orientiert angeordnet sind, wobei zwischen zwei benachbart angeordneten Rohrdüsen 12 ein Wärmestrahler 11 angeordnet ist und dass an einem stirnseitigen Ende ein zentraler Gebläsekasten angeordnet ist, welcher die Rohrdüsen 12 mit erwärmter Luft versorgt.

## Beschreibung

Die vorliegende Erfindung betrifft ein Ofensystem zur Erwärmung von Verbundglasscheiben gemäß den Merkmalen im Oberbegriff von Anspruch 1.

Aus dem Stand der Technik sind Verbundglasscheiben bekannt. Diese Verbundglasscheiben werden auch Verbundsicherheitsglas genannt. Zur Herstellung eines solchen Verbundsicherheitsglases wird ein Glaspaket aus mindestens 2 aufeinanderliegenden Scheiben bereitgestellt sowie ein dazwischenliegender Werkstoff. Der dazwischenliegende Werkstoff wird insbesondere als Folie bereitgestellt und ist auf einer Kunststoffbasis ausgebildet.

Damit nunmehr dieses Glaspaket eine dauerhafte Verbindung eingeht, wird das Glaspaket einer Temperatur- und Druckbehandlung unterzogen. Mithin wird das Glaspaket erwärmt, sodass die dazwischenliegende Folie weich wird oder gar aufschmilzt und sich somit beidseitig mit den Glasscheiben verbindet. Es muss dabei sichergestellt werden, dass die Folie homogen erwärmt wird, um eine vollflächige Verbindung herzustellen. Gleichzeitig darf die Folie nicht zu stark erwärmt werden, da sonst ein Verbrennen bzw. zu starkes Aufschmilzen der Folie erfolgt.

Aus dem Stand der Technik sind dazu zwei Erwärmungsmethoden bekannt. Zum einen ist dies die Erwärmung mittels Strahlungswärme. Zum anderen ist es eine Erwärmung, die über Konvektion erfolgt. Bei einer Strahlungswärmequelle kann die Strahlung häufig nicht bis zu den Folien selbst derart durchdringen, dass gerade die Folie erwärmt wird. Zur Kompensation dessen muss dann der Anteil an Konvektionswärme erhöht werden. Bei der Konvektionserwärmung, anders bei der Strahlungserwärmung, bei dem die Folie selbst die Wärmestrahlung absorbiert und sich dadurch erwärmt, müssen die Scheiben erwärmt werden. Je dicker die Glaspakete sind, desto langsamer wird die Transportgeschwindigkeit durch die Ofeneinrichtung. Ebenfalls wird ein erhöhter Energieeintrag benötigt, da die kompletten Glasscheiben entsprechend erwärmt, insbesondere homogen erwärmt werden müssen und das mittels Konvektion.

Ein Ofen, der beide Erwärmungsmöglichkeiten miteinander kombiniert, ist beispielsweise aus der EP 2 431 172 B1 bekannt.

Aufgabe der vorliegenden Erfindung ist es eine Ofeneinrichtung bereitzustellen, mit der es möglich ist, Verbundglasscheiben zu erwärmen, wobei die Ofeneinrichtung besonders energiearm und hinsichtlich der Aufheizung der Verbundglasscheiben besonders effektiv betrieben werden kann.

Die zuvor genannte Aufgabe wird erfindungsgemäß mit einem Ofensystem gemäß den Merkmalen im Anspruch 1 gelöst.

Vorteilhafte Ausgestaltungvarianten sind Gegenstand der abhängigen Ansprüche.

Das Ofensystem zur Erwärmung von Verbundglasscheiben weist mindestens ein Ofenmodul auf. Die Verbundglasscheiben werden horizontal orientiert auf Transportrollen durch das Ofensystem befördert. Das Ofensystem bzw. das jeweilige Ofenmodul weist ein äußeres kastenförmiges Gehäuse auf. Es können im Sinne der Erfindung mehrere Ofenmodule hintereinander in Reihe angeordnet werden. In dem Gehäuse sind Strahlungswärmequellen und Konvektionswärmequellen angeordnet.

Erfindungsgemäß zeichnet sich das Ofensystem dadurch aus, dass die Konvektionswärmequellen als längliche Rohrdüsen mit punktförmigen Ausströmöffnungen ausgebildet sind. Die Rohrdüsen selbst sind quer zur Transportrichtung orientiert angeordnet. Zwischen zwei benachbart angeordneten Rohrdüsen ist ein Wärmestrahler angeordnet. Der Wärmestrahler ist ebenfalls länglich bzw. linienförmig ausgebildet. Auch der Wärmestrahler ist quer orientiert zur Transportrichtung angeordnet.

Das erfindungsgemäße Ofensystem zeichnet sich weiterhin dadurch aus, dass an einem stirnseitigen Ende innerhalb des Gehäuses ein zentraler Gebläsekasten angeordnet ist. Über dem Gebläsekasten werden die Rohrdüsen mit erwärmter Luft versorgt.

Eine Rohrdüse weist im Sinne der Erfindung einen länglichen Rohrkörper auf, wobei in dem Rohrkörper punktförmige Ausströmöffnungen vorgesehen sind. Durch die punktförmigen Ausströmöffnungen kann dann erwärmte Luft mithin Konvektionswärme bzw. ein warmer Luftstrom gezielt gerichtet abgegeben werden.

Im Sinne der Erfindung sind die Rohrdüsen und Wärmestrahler oberseitig und unterseitig der zu transportierenden Glasscheiben angeordnet. Es kann somit ein homogener Wärmeeintrag von beiden Seiten in ein jeweiliges Glasscheibenpaket eingebracht werden, was wiederum eine besonders homogene, gleichzeitig auch zeitlich effektive Erwärmung bis an die zwischen zumindest zwei Glasscheiben liegende Folie ermöglicht wird.

Weiterhin besonders bevorzugt ist je eine Rohrdüse an der Oberseite, eine Rohrdüse an der Unterseite gegenüberliegend angeordnet.

Ebenfalls weiterhin bevorzugt ist je ein Wärmestrahler an der Oberseite einem Wärmestrahler an der Unterseite gegenüberliegend angeordnet. Hierdurch ist es möglich, dass in Transportrichtung zum gleichen Zeitpunkt oberseitig und unterseitig des Glasscheibenpaketes der gleiche Wärmeeintrag erfolgt. Auch hierdurch wird die Homogenität des Wärmeeintrages wiederum verbessert.

Aufgrund der nicht immer notwendigen vollen Kapazität zur Erwärmung des Glasscheibenpaketes können baulich auch Rohrdüsen bzw. Wärmestrahler weggelassen werden. Es bleibt somit mehr Platz im Innenraum des Ofensystems.

Erfindungsgemäß wird durch nur den einen stirnseitig angeordneten Gebläsekasten der maschinelle Aufwand reduziert. Es ist nur ein Gebläse pro Ofenmodul notwendig, um alle Rohrdüsen innerhalb des Ofenmoduls mithin die oberseitig des Glasscheibenpaketes angeordneten Rohrdüsen und die unterseitig des Glasscheibenpaketes angeordneten Rohrdüsen mit erwärmter Luft zu versorgen. Erfindungsgemäß ist es somit möglich, dass der eine Gebläsekasten seitlich in dem gehäuseförmigen Kasten des Ofenmoduls angeordnet ist. Durch die Ausbildung von länglichen Rohrdüsen kann dennoch über die gesamte Länge der Rohrdüse bzw. über die gesamte Fläche des Ofensystems Konvektionsluft ausgebracht werden. Hierdurch wird effektiv ein besonders großer Transportraum für die Glasscheiben bereitgestellt, ohne dass der Innenraum des Ofenmoduls wiederum durch eine Vielzahl von Gebläsekästen o. ä. nachteilig ausgefüllt bzw. beeinträchtigt wird. Hierzu ist insbesondere in dem Gehäuse angeordnete Absaugöffnung bzw. Ansaugöffnung vorgesehen, sodass die in dem Ofenmodul befindliche erwärmte Luft wiederverwendet wird. Die Ansaugöffnung ist insbesondere auf die Vertikalrichtung bezogen in einem oberen Drittel bzw. oberen Bereich des Ofensystems angeordnet. Insbesondere befindet sich hier die nach oben steigende erwärmte Luft. Es findet somit eine energieeffiziente Nutzung der Wärmeverteilung bzw. der Wiederverwendung von erwärmter Luft statt. In dem Gebläsekasten, insbesondere im Bereich des Ansaugens ist weiterhin eine Erwärmungseinrichtung vorgesehen, um die Luft auf eine vorgegebene bzw. vorbestimmte Temperatur zu temperieren.

Durch die Verwendung nur eines Gebläsekastens sinkt nicht nur der maschinelle Aufwand, da nur ein Gebläse betrieben werden muss, gleichzeitig sinkt auch der benötigte Bauraum, sodass die Ofenmodule bezüglich ihrer inneren und auch äußeren Abmessung besonders kompakt aufgebaut sind.

Ein weiterer erfindungsgemäßer Vorteil liegt darin, dass durch Verwendung der Rohrdüsen mit Austrittsöffnungen die erwärmte Luft bzw. Luftströmung in einem Winkel von zumindest ungleich 90 Grad auf die Oberfläche der Verbundglasscheibe ausströmen kann. Radial umlaufend können im Querschnitt an der Rohrdüse mehrere Austrittsöffnungen angeordnet sein. Es ist auch denkbar, dass eine zentrale Austrittsöffnung derart angeordnet ist, dass die Luftströmung zusätzlich einem 90 Grad Winkel auf die Oberfläche der Glasscheibe trifft. Durch jedoch radial in einem Winkel von abweichend 90 Grad zu der Oberfläche des Glasscheibenpaketes angeordnete weitere Austrittsöffnung ist es möglich, die Luft gezielt in einem Winkel ungleich 90 Grad auf die Oberfläche des Glasscheibenpaketes zu lenken. Dies bietet wiederum erfindungsgemäß mindestens zwei Vorteile. Durch eine möglichst großflächige Verteilung der warmen Luft, welche aus einer Rohrdüse austritt, kann in einem kurzen Transportzeitraum eine relativ dazu gesehen große Oberfläche der Glasscheibe mittels Konvektion erwärmt werden.

Ein weiterer Vorteil ist, dass die Rohrdüsen gerade im unteren Bereich des Ofensystems zwischen den Transportrollen angeordnet werden kann. Durch die seitlich in einem Winkel abströmende Luft aus der Rohrdüse ist es somit möglich, Rohrdüsen auf die Vertikalrichtung bezogen nahezu unmittelbar hinter einer Transportrolle anzuordnen, gleichzeitig wird jedoch sichergestellt, dass durch die Austrittsöffnung seitlich abströmende Luft dennoch die Oberfläche bzw. in diesem Fall die Unterseite des Glasscheibenpaktes erwärmt werden.

Weitere Vorteile, Merkmale und Eigenschaften der vorliegenden Erfindung sind Gegenstand der nachfolgenden Beschreibung. Bevorzugte Ausgestaltungsvarianten werden in schematischen Figuren darstellt. Diese dienen dem einfachen Verständnis der Erfindung. Es zeigen:
- Figur 1 a bis c: verschiedene Glasscheibenpakte in schematischer Seitenansicht
- Figur 2: ein Ofenmodul in Längsschnittansicht
- Figur 3: zwei in Reihe hintereinander geschaltete Ofenmodule in Querschnittsansicht
- Figur 4: eine schematische Querschnittsansicht zu Rohrdüsen und Wärmestrahlern mit Transportrollen.
- Figur 5: eine Querschnittsansicht durch eine Rohrdüse

In den Figuren werden für gleiche oder ähnliche Bauteile dieselben Bezugszeichen verwendet, auch wenn eine wiederholte Beschreibung aus Vereinfachungsgründen entfällt.

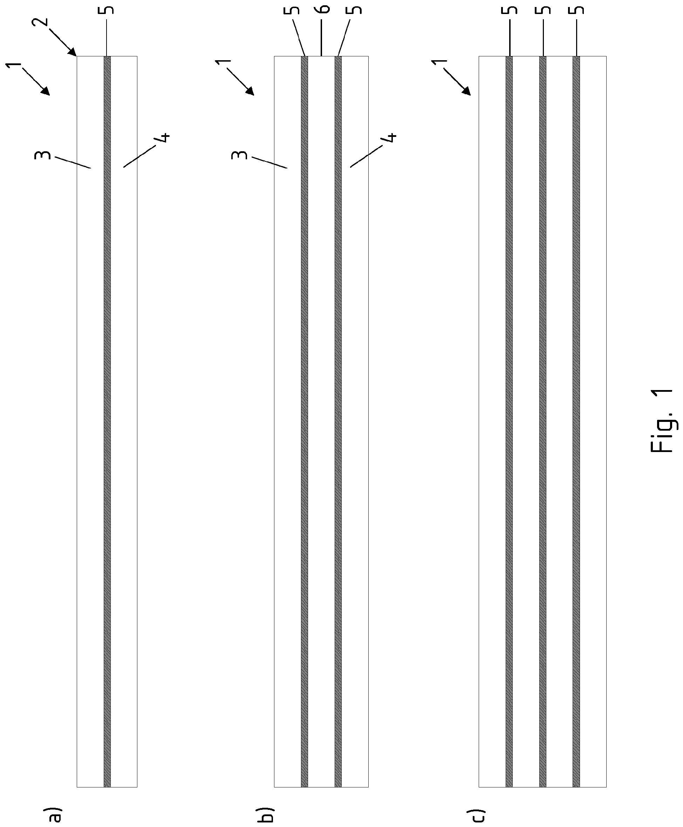

Figur 1 a, b und c zeigen verschiedene Verbundglasscheiben 1 in Querschnittsansicht. Die Verbundglasscheibe 1 gemäß Figur 1 besteht aus einem Glasscheibenpaket 2 aus einer oberen Glasscheibe 3 und einer unteren Glasscheibe 4, die parallel aufeinander liegen. Dazwischen ist eine Folie 5 angeordnet. Mit erfindungsgemäßen Ofensystem 7 ist es möglich, die zwischen den Glasscheiben befindliche Folie 5 zu erwärmen, sodass diese weich wird und sich mit den Glasscheiben verklebt.

Figur 1 b zeigt ebenfalls eine Verbundglasscheibe 1. Hier besteht das Glasscheibenpaket 2 jedoch aus drei Glasscheiben mithin einer oberen 3, einer unteren 4 und einer mittleren Glasscheibe 6. Jeweils dazwischen ist eine Folie 5 angeordnet. Gemäß Figur 1 c besteht das Glasscheibenpaket 2 aus vier Glasscheiben mit jeweils dazwischen angeordneten Folien 5. Insbesondere bei den Glasscheiben gemäß Figur 1 b und 1c ist es mitunter schwieriger, dass die weiter innen liegenden Folien 5 beidseitig homogen erwärmt werden.

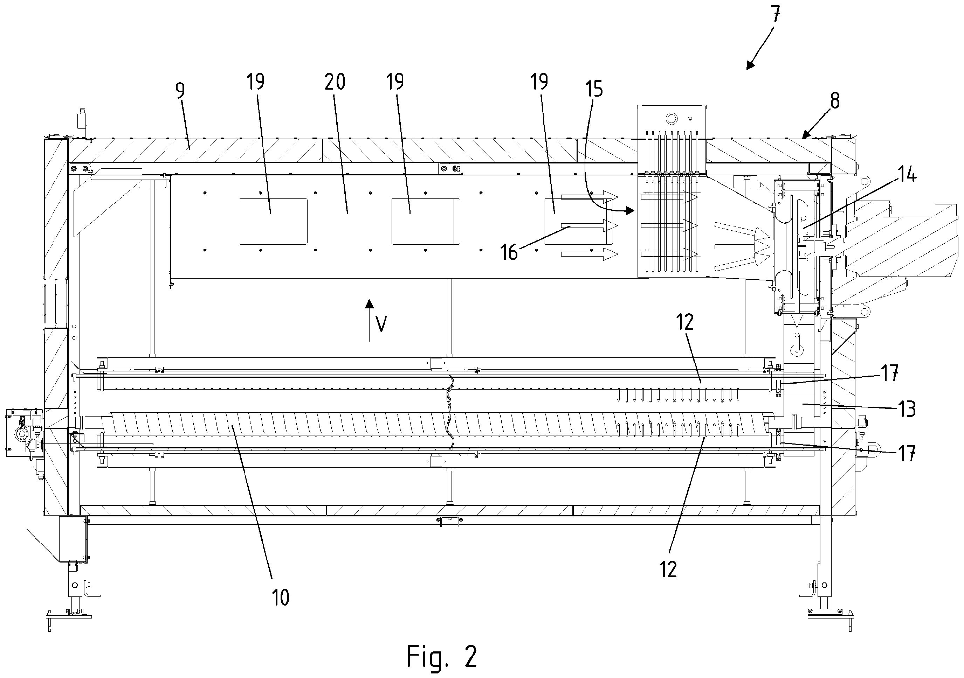

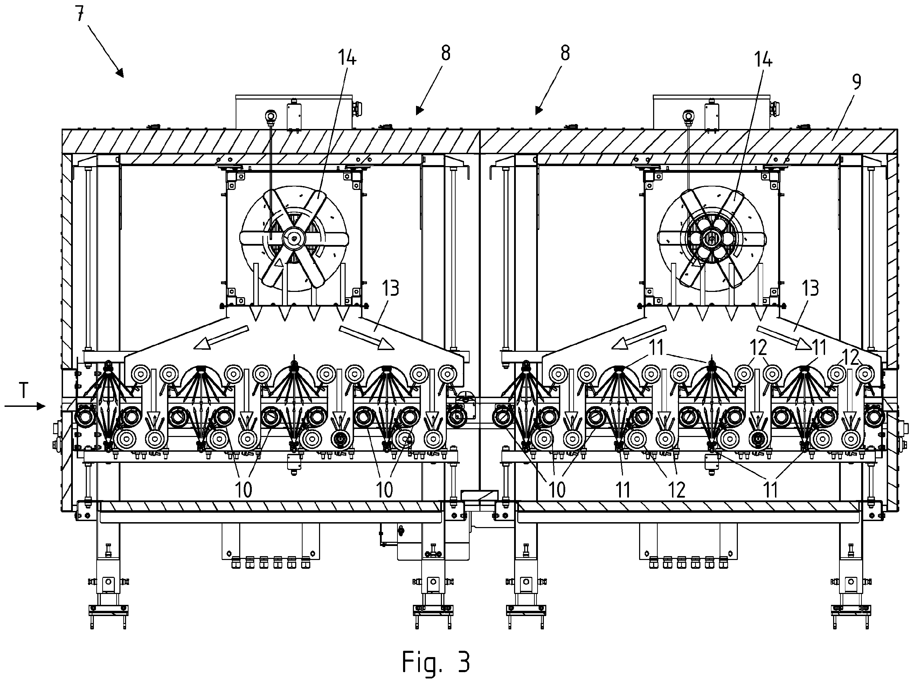

Hierzu sieht das in Figur 2 in einer Stirnansicht im Längsschnitt dargestellte Ofensystem 7 vor, dass mindestens ein Ofenmodul 8 ausgebildet ist, welche ein außenliegendes kastenförmiges Gehäuse aufweist. Gemäß der Querschnittsansicht in Figur 3 sind zwei Ofenmodule 8 in einer Transportrichtung hintereinandergeschaltet, wobei das kastenförmige Gehäuse 9 beider Ofenmodule 8 in der Mitte verbunden ist, sodass ein außenliegendes kastenförmiges Gehäuse 9 ausgebildet ist.

In dem Ofenmodul 8 selbst sind Transportrollen 10 angeordnet. Die Transportrollen 10 selbst können beispielsweise aktiv angetrieben sein und befördern dann in Transportrichtung T eine Verbundglasscheibe 1 bzw. aufeinanderfolgend hintereinander mehrere Verbundglasscheiben 1 durch das Ofensystem 7.

Damit die Verbundglasscheiben 1 nunmehr innerhalb des Ofensystems 7 erwärmt werden, ist eine Kombination aus Wärmestrahlern sowie Rohrdüsen angeordnet. Die Wärmestrahler 11 erzeugen dabei eine Wärmestrahlung. Die Rohrdüsen 12 erzeugen einen Luftstrom, der dann zu konvektiver Erwärmung führt. Erfindungsgemäß ist stirnseitig, auf die Bildebene von Figur 2 auf der rechten Seite innerhalb des kastenförmigen Gehäuses 9 ein Gebläsekasten 13 angeordnet. Dieser Gebläsekasten 13 ist mit einem Ventilator 14 verbunden, der wiederum mit einer Ansaugöffnung 15 gekoppelt ist. Hierdurch wird ein erwärmter Luftstrom 16 innerhalb des kastenförmigen Gehäuses 9 angesaugt. Die Ansaugöffnung 15 ist somit auf die Vertikalrichtung V bezogen im oberen Drittel angeordnet, sodass die erwärmte aufgestiegene Luft angesaugt und dann über den Ventilator 14 in den Gebläsekasten 13 geleitet wird. Der Gebläsekasten 13 selbst ist wiederum über einen stirnseitigen Anschluss an die Rohrdüsen gekoppelt. Somit können sowohl auf die Bildebene bezogen oben angeordnete als auch unten angeordneter Rohrdüsen 12 in einem Ofenmodul 8 zentral über einen Gebläsekasten mit warmer Konvektionsluft gespeist werden.

Optional bzw. ergänzend kann der Ansaugöffnung 15 ein Ansaugkanal vorgeschaltet sein. Der Ansaugkanal 20 selbst kann über variabel in ihrer Öffnungsgröße einstellbare Öffnungen 20 eingestellt werden. Dadurch dass die Öffnungen 19 und ein Ansaugkanal 20 in einem oberen Teil des Gehäuses 9 angeordnet sind, kann aufsteigende, restwarme Luft wiederum angesaugt werden. Eine erneute Erwärmung kann unter Einsatz minimaler zugeführter externer Energie stattfinden.

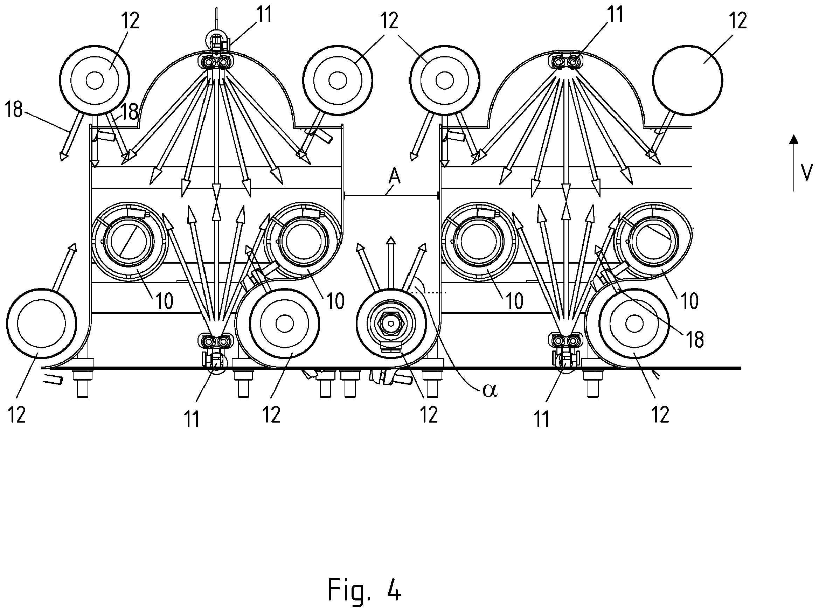

Ferner ist insbesondere in einer Prinzipdarstellung gemäß Figur 4 gut ersichtlich, dass erwärmte Luft aus den Rohrdüsen 12 auch jeweils seitlich aus einer Rohrdüse 12 austritt. Somit kann eine jeweilige Rohrdüse 12 auch auf die Vertikalrichtung V bezogen hinter einer Transportrolle 10 angeordnet sein. Es ist dennoch möglich, dass über die jeweilige Austrittsöffnung, die insbesondere als Loch innerhalb des Rohres der Rohrdüse 12 ausgebildet ist, die Luft in einem Winkel α ungleich 90 Grad bezogen auf die Glasoberfläche bzw. die Transportrichtung T austritt, somit schräg bzw. seitlich auf eine Glasoberfläche auftritt. Hiermit wird der Vorteil erreicht, dass Rohrdüsen 12 auch verdeckt angeordnet werden können, mithin hinter einer Transportrolle 10. Gleichzeitig wird ein größerer Flächenbereich A mit warmer Luft aus der Rohrdüse 12 bedeckt bzw. benetzt. Dargestellt ist dies in Figur 4 bei der Rohrdüse 12 ca. in der Mitte. Die Verweilzeit im Ofen kann damit verkürzt werden bzw. die Transportgeschwindigkeit gesteigert werden, bei gleichzeitiger homogener Erwärmung.

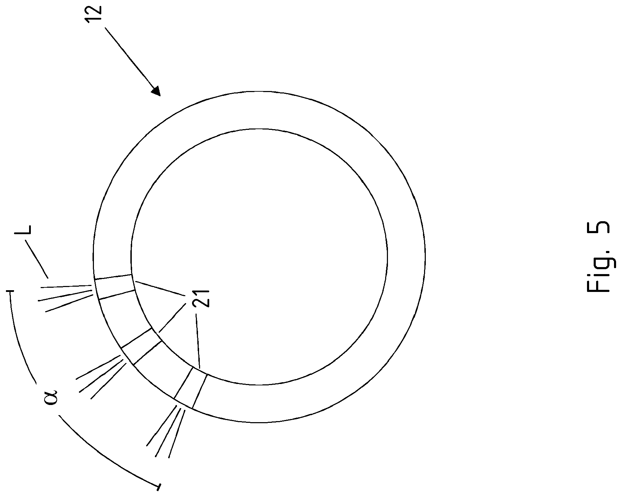

Figur 5 zeigt eine Rohrdüse 12 in Querschnittsansicht. Dargestellt sind die Austrittsöffnungen 21, durch welche die erwärmte Luft L aus der Rohrdüse 12 austreten kann. Die Austrittsöffnungen 21 erstrecken sich über einen Winkelbereich bzw. Winkel a, vorzugsweise zwischen 10° Grad und 80°, insbesondere zwischen 20° Grad und 70° Grad. Somit kann die erwärmte Luft auch in einem Winkel auf die Oberfläche des Glasscheibenpaketes aufgebracht werden.

### Bezugszeichen:

- 1 -: Verbundglasscheibe
- 2 -: Glasscheibenpaket
- 3 -: obere Glasscheibe
- 4 -: untere Glasscheibe
- 5 -: Folie
- 6 -: mittlere Glasscheibe
- 7 -: Ofensystem
- 8 -: Ofenmodul
- 9 -: Gehäuse
- 10 -: Transportrolle
- 11 -: Wärmestrahler
- 12 -: Rohrdüse
- 13 -: Gebläsekasten
- 14 -: Ventilator
- 15 -: Ansaugöffnung
- 16 -: erwärmter Luftstrom
- 17 -: stirnseitiger Anschluss
- 18 -: seitlich abströmende Luft
- 19 -: Öffnungen
- 20 -: Ansaugkanal
- 21 -: Austrittsöffnungen

- L -: Luftstrom
- T -: Transportrichtung
- V -: Vertikalrichtung
- A -: Flächenbereich
- α -: Winkel

## Patentansprüche

1. Ofensystem (7) zur Erwärmung von Verbundglasscheiben (1), aufweisend mindestens ein Ofenmodul (8), wobei die Verbundglasscheiben horizontal orientiert auf Transportrollen (10) durch das Ofensystem (7) transportierbar sind und das Ofensystem (7) ein äußeres kastenförmiges Gehäuse (9) aufweist, wobei in dem Gehäuse (9) Strahlungswärmequellen und Konvektionswärmequellen angeordnet sind, **dadurch gekennzeichnet, dass** die Konvektionswärmequellen als längliche Rohrdüsen mit punktförmigen Ausströmöffnungen ausgebildet sind, die quer zur Transportrichtung orientiert angeordnet sind, wobei zwischen zwei benachbart angeordneten Rohrdüsen (12) ein Wärmestrahler (11) angeordnet ist und dass an einem stirnseitigen Ende ein zentraler Gebläsekasten angeordnet ist, welcher die Rohrdüsen (12) mit erwärmter Luft versorgt.

2. Ofensystem (7) nach Anspruch 1, **dadurch gekennzeichnet, dass** Rohrdüsen (12) und Wärmestrahler (11) oberseitig und unterseitig der zu transportierenden Glasscheiben angeordnet sind.

3. Ofensystem (7) nach einem der Ansprüche 1 oder 2, **dadurch gekennzeichnet, dass** je einer Rohrdüse (12) an der Oberseite, eine Rohrdüse (12) an der Unterseite gegenüberliegend angeordnet ist.

4. Ofensystem (7) nach einem der Ansprüche 1 bis 3, **dadurch gekennzeichnet, dass** je einem Wärmestrahler (11) an der Oberseite, ein Wärmestrahler an der Unterseite gegenüberliegend angeordnet ist.

5. Ofensystem (7) nach einem der Ansprüche 1 bis 4, **dadurch gekennzeichnet, dass** der Gebläsekasten (13) in dem Gehäuse (9) angeordnet ist.

6. Ofensystem (7) nach einem der Ansprüche 1 bis 5, **dadurch gekennzeichnet, dass** der Gebläsekasten (13) die Innenraumluft in dem Gehäuse (9) ansaugt, wobei eine Ansaugöffnung (15) bezogen auf die Vertikalrichtung (V) in einem oberen Teil des Gehäuses (9) angeordnet ist.

7. Ofensystem nach einem der Ansprüche 1 bis 6, **dadurch gekennzeichnet, dass** dem Gebläsekasten eine Heizeinrichtung zugeordnet ist.

8. Ofensystem nach einem der Ansprüche 1 bis 7, **dadurch gekennzeichnet, dass** die Rohrdüsen erwärmte Luft auch seitlich in einem Winkel zwischen 10 und 80°, insbesondere zwischen 20 und 70° auf die Oberfläche der Verbundglasscheiben aufbringen.

9. Ofensystem nach einem der Ansprüche 1 bis 8, **dadurch gekennzeichnet, dass** die Rohrdüsen in Vertikalrichtung hinter einer Transportrolle angeordnet sind und dass zwischen zwei Transportrollen eine Strahlungswärmequelle angeordnet ist.
